# EUROPEAN PATENT APPLICATION

(11) **EP 4 738 981 A1**
(43) Date of publication of application: **06.05.2026**
(21) Application number: 23942772.7
(22) Date of filing: 27.06.2023
(51) Int. Cl.: H04W 76/28

(54) **METHOD FOR DETERMINING EFFECTIVE TIME, AND TERMINAL, NETWORK DEVICE AND STORAGE MEDIUM**

(71) Applicant: Beijing Xiaomi Mobile Software Co., Ltd., Beijing 100085 (CN)
(72) Inventor: FU, Ting, Beijing 100085 (CN)
(74) Representative: Gunzelmann, Rainer
(86) International application number: PCT/CN2023/102966
(87) International publication number: WO 2025/000248

(57) **Abstract**

The present disclosure relates to a method for determining an effective time, and a terminal, a network device and a storage medium. The method comprises: a terminal receiving first information sent by a network device, wherein the first information is used for instructing to activate or deactivate a discontinuous transmission/reception mode of one or more carriers; and the terminal determining an effective time of the first information according to a first time-domain unit where the first information is located. In the method of the present disclosure, a terminal receives first information sent by a network device, and can determine an effective time of the first information according to a time-domain unit where the first information is located, such that an occasion when a discontinuous transmission/reception mode of a corresponding carrier is activated or deactivated can be learned of in a timely manner, thereby being conducive to adaptively adjusting a transmission/reception behavior of the terminal itself in view of performing an adjustment in the discontinuous transmission/reception mode.

## Description

### FIELD

The present disclosure relates to the field of communication technologies, and in particular relates to a method for determining an effective time, a terminal, a network device and a storage medium.

### BACKGROUND

A network energy saving project aims to study technologies to reduce energy consumption of a network device. A possible network energy saving method is a discontinuous transmission (DTX) pattern or a discontinuous reception (DRX) pattern of a cell base station.

### SUMMARY

A base station may send to a terminal an instruction for activating or deactivating discontinuous transmission (DTX) or discontinuous reception (DRX), and it is needed to determine when the instruction takes effect.

The present disclosure provides a method for determining an effective time, a terminal, a network device and a storage medium.

According to a first aspect of the present disclosure, there is provided a method for determining an effective time. The method includes:
receiving, by a terminal, first information sent by a network device, in which the first information indicates activation or deactivation of a discontinuous transmission/reception pattern of one or more carriers; and
determining, by the terminal, an effective time of the first information according to a first time domain unit in which the first information is located.

In the method of the present disclosure, the terminal receives the first information sent by the network device, and may determine the effective time of the first information according to the time domain unit in which the first information is located, such that an opportunity of activation or deactivation of the discontinuous transmission/reception pattern of the corresponding carrier may be obtained in time, which is beneficial for adaptively adjusting its own transmission/reception behavior in conjunction with the discontinuous transmission/reception pattern.

According to a second aspect of the present disclosure, there is provided a method for determining an effective time. The method includes:
sending, by a network device, first information to a terminal, in which the first information indicates activation or deactivation of a discontinuous transmission/reception pattern of one or more carriers; and
determining, by the network device, an effective time of the first information according to a first time domain unit in which the first information is located.

In the method of the present disclosure, the network device sends the first information to the terminal, and may determine the effective time of the first information according to the time domain unit in which the first information is located, such that the network device and the terminal may determine the same effective time according to the first information, to enable the network device and the terminal to adaptively adjust their own transmission/reception behavior.

According to a third aspect of the present disclosure, there is provided a terminal. The terminal includes:
a transceiver module configured to receive first information sent by a network device, in which the first information indicates activation or deactivation of a discontinuous transmission/reception pattern of one or more carriers; and
a processing module configured to determine an effective time of the first information according to a first time domain unit that in which the first information is received.

According to a fourth aspect of the present disclosure, there is provided a network device. The network device includes:
a transceiver module configured to send first information to a terminal, in which the first information indicates activation or deactivation of a discontinuous transmission/reception pattern of one or more carriers; and
a processing module configured to determine an effective time of the first information according to a first time domain unit in which the first information is located.

According to a fifth aspect of the present disclosure, there is provided a terminal. The terminal includes:
one or more processors,
in which the terminal is configured to perform the method described in the first aspect.

According to a sixth aspect of the present disclosure, there is provided a network device. The network device includes:
one or more processors,
in which the network device is configured to perform the method described in the second aspect.

According to a seventh aspect of the present disclosure, there is provided a communication system. The communication system includes a network device and a terminal, in which, the terminal is configured to implement the method described in the first aspect; and the network device is configured to implement the method described in the second aspect.

According to an eighth aspect of the present disclosure, there is provided a storage medium storing instructions that, when running on a communication device, enable the communication device to perform the method described in the first aspect or the second aspect.

### BRIEF DESCRIPTION OF THE DRAWINGS

In order to more clearly explain technical solutions in embodiments of the present disclosure, the drawings necessary for the description of embodiments are described below, and the following drawings are only some embodiments of the present disclosure, and do not specifically limit the scope of protection of the present disclosure.
FIG. 1 is a schematic diagram illustrating an architecture of a communication system according to embodiments of the present disclosure.
FIG. 2a is an illustrative interaction diagram illustrating a method according to embodiments of the present disclosure.
FIG. 2b is a schematic diagram illustrating a DTX according to embodiments of the present disclosure.
FIG. 3a is an illustrative flowchart illustrating a method according to embodiments of the present disclosure.
FIG. 3b is an illustrative flowchart illustrating a method according to embodiments of the present disclosure.
FIG. 3c is an illustrative flowchart illustrating a method according to embodiments of the present disclosure.
FIG. 3d is an illustrative flowchart illustrating a method according to embodiments of the present disclosure.
FIG. 3e is an illustrative flowchart illustrating a method according to embodiments of the present disclosure.
FIG. 4a is an illustrative flowchart illustrating a method according to embodiments of the present disclosure.
FIG. 4b is an illustrative flowchart illustrating a method according to embodiments of the present disclosure.
FIG. 4c is an illustrative flowchart illustrating a method according to embodiments of the present disclosure.
FIG. 4d is an illustrative flowchart illustrating a method according to embodiments of the present disclosure.
FIG. 4e is an illustrative flowchart illustrating a method according to embodiments of the present disclosure.
FIG. 5a is a block diagram illustrating a terminal according to embodiments of the present disclosure.
FIG. 5b is a block diagram illustrating a network device according to embodiments of the present disclosure.
FIG. 6a is a block diagram illustrating a communication device according to embodiments of the present disclosure.
FIG. 6b is a block diagram illustrating a communication device according to embodiments of the present disclosure.

### DETAILED DESCRIPTION

The present disclosure provides a method for determining an effective time, a terminal, a network device and a storage medium.

According to a first aspect of the present disclosure, there is provided a method for determining an effective time. The method includes:
receiving, by a terminal, first information sent by a network device, in which the first information indicates activation or deactivation of a discontinuous transmission/reception pattern of one or more carriers; and
determining, by the terminal, an effective time of the first information according to a first time domain unit in which the first information is located.

In the above embodiment, the terminal receives the first information sent by the network device, and may determine the effective time of the first information according to the time domain unit in which the received first information is located, such that an opportunity of activation or deactivation of the discontinuous transmission/reception pattern of the corresponding carrier may be obtained in time, which is beneficial for adaptively adjusting its own transmission/reception behavior in conjunction with the discontinuous transmission/reception pattern.

In connection with some embodiments of the first aspect, in some embodiments, the effective time is after an end position of the first time domain unit.

In the above embodiments, the terminal may determine that the effective time is after the end position of the first time domain unit. Therefore, after the end position, the terminal may reasonably adjust its own transmission/reception behavior according to the first information and the state of the discontinuous transmission/reception pattern of the network device on the corresponding carrier.

In connection with some embodiments of the first aspect, in some embodiments, the effective time is spaced from the end position by a first duration, and the first duration is greater than or equal to 0.

In the above embodiments, the terminal may more accurately determine the effective time, and adjust its own transmission/reception behavior at an appropriate opportunity.

In connection with some embodiments of the first aspect, in some embodiments, the effective time is a start time of a first discontinuous transmission/reception period of the discontinuous transmission/reception pattern after a second duration from the end position, and the second duration is greater than or equal to 0.

In the above embodiments, the terminal adjusts its own transmission/reception behavior according to the first information at the start time of the first discontinuous transmission/reception period after receiving the first information in combination with the discontinuous transmission/reception period.

In connection with some embodiments of the first aspect, in some embodiments, the effective time is an end time of a discontinuous transmission/reception period of the discontinuous transmission/reception pattern in which a third duration after the end position is located, and the third duration is greater than or equal to 0.

In the above embodiments, the terminal adjusts its own transmission/reception behavior in time according to the first information after the current discontinuous transmission/reception period of receiving the first information ends.

In connection with some embodiments of the first aspect, in some embodiments, the first information indicates to deactivate the discontinuous transmission/reception pattern of the one or more carriers, and the effective time is an end time of a first time period in a discontinuous transmission/reception period of the discontinuous transmission/reception pattern in which the first time domain unit is located; and
the first time period is a time period in which the network device sends downlink information or receives uplink information in the discontinuous transmission/reception period.

In the above embodiments, in a case where the first information is used to deactivate the discontinuous transmission/reception pattern, the terminal may adjust its own transmission/reception behavior according to the discontinuous transmission/reception pattern after the first time period in the discontinuous transmission/reception period.

In connection with some embodiments of the first aspect, in some embodiments, the discontinuous transmission/reception period of the discontinuous transmission/reception pattern includes a first time period and a second time period, a start time of the discontinuous transmission/reception period is a start time of the first time period or a start time of the second time period, and an end time of the discontinuous transmission/reception period is an end time of the second time period or an end time of the first time period; and
the first time period is a time period in which the network device sends downlink information or receives uplink information in the discontinuous transmission/reception period, and the second time period is a time period in which the network device is not able to send part of the downlink information or receive part of the uplink information.

In the above embodiments, the start time or the end time of the discontinuous transmission/reception period is beneficial for the terminal to accurately determine the effective time of the first information.

In connection with some embodiments of the first aspect, in some embodiments, receiving, by the terminal, the first information sent by the network device includes:
receiving, by the terminal on a first carrier, the first information sent by the network device;
in which a plurality of carriers have different subcarrier spacings (SCSs), and the plurality of carriers include the first carrier.

In the above embodiments, in a case where the first information activates or deactivates the discontinuous transmission/reception pattern of the multiple carriers, the SCS of the multiple carriers may be different, and the terminal may receive the first information sent by the network device on a certain carrier.

In connection with some embodiments of the first aspect, in some embodiments, the method further includes:
determining, by the terminal according to a minimum SCS among the SCSs of the plurality of carriers, an end position of a first time domain unit corresponding to each carrier.

In the above embodiments, the less the SCS is, the longer the corresponding time domain unit, such as slot, and the terminal 101 may determine the end position of the first time domain unit according to the minimum SCS, thus accurately determining the effective times of the first information on the respective carriers.

In connection with some embodiments of the first aspect, in some embodiments, the method further includes:
determining, by the terminal according to an SCS of the first carrier, an end position of a first time domain unit corresponding to a second carrier, in which the plurality of carriers include the second carrier.

In the above embodiments, the terminal determines the end position of the relevant carrier in the first time domain unit according to the SCS of the first carrier, thus accurately determining the effective times of the first information on the respective carriers.

In connection with some embodiments of the first aspect, in some embodiments, the second carrier is any one of the plurality of carriers, or an SCS of the second carrier is greater than or equal to the SCS of the first carrier.

In connection with some embodiments of the first aspect, in some embodiments, the method further includes:
determining, by the terminal according to an SCS of a second carrier, an end position of a first time domain unit corresponding to the second carrier, in which the SCS of the second carrier is less than an SCS of the first carrier.

In the above embodiments, the terminal determines the end position of the first time domain unit corresponding to the second carrier according to the SCS of the second carrier, thus accurately determine the effective time of the first message on the second carrier.

In connection with some embodiments of the first aspect, in some embodiments, the discontinuous transmission/reception pattern includes any of:
a discontinuous transmission (DTX) pattern; or
a discontinuous reception (DRX) pattern.

According to a second aspect of embodiments of the present disclosure, there is provided a method for determining an effective time. The method includes:
sending, by a network device, first information to a terminal, in which the first information indicates activation or deactivation of a discontinuous transmission/reception pattern of one or more carriers; and
determining, by the network device, an effective time of the first information according to a first time domain unit in which the first information is located.

In the above embodiments, the network device sends the first information to the terminal, and may determine the effective time of the first information according to the time domain unit in which the first information is located, such that the network device and the terminal may determine the same effective time according to the first information, to enable the network device and the terminal to adaptively adjust their own transmission/reception behavior.

In connection with some embodiments of the second aspect, in some embodiments, the effective time is after an end position of the first time domain unit.

In connection with some embodiments of the second aspect, in some embodiments, the effective time is spaced from the end position by a first duration, and the first duration is greater than or equal to 0.

In connection with some embodiments of the second aspect, in some embodiments, the effective time is a start time of a first discontinuous transmission/reception period of the discontinuous transmission/reception pattern after a second duration from the end position, and the second duration is greater than or equal to 0.

In connection with some embodiments of the second aspect, in some embodiments, the effective time is an end time of a discontinuous transmission/reception period of the discontinuous transmission/reception pattern in which a third duration after the end position is located, and the third duration is greater than or equal to 0.

In connection with some embodiments of the second aspect, in some embodiments, the first information indicates to deactivate the discontinuous transmission/reception pattern of the one or more carriers, and the effective time is an end time of a first time period in a discontinuous transmission/reception period of the discontinuous transmission/reception pattern in which the first time domain unit is located; and
the first time period is a time period in which the network device sends downlink information or receives uplink information in the discontinuous transmission/reception period.

In connection with some embodiments of the second aspect, in some embodiments, the discontinuous transmission/reception period of the discontinuous transmission/reception pattern includes a first time period and a second time period, a start time of the discontinuous transmission/reception period is a start time of the first time period or a start time of the second time period, and an end time of the discontinuous transmission/reception period is an end time of the second time period or an end time of the first time period; and
the first time period is a time period in which the network device sends downlink information or receives uplink information in the discontinuous transmission/reception period, and the second time period is a time period in which the network device is not able to send part of the downlink information or receive part of the uplink information.

In connection with some embodiments of the second aspect, in some embodiments, receiving, by the terminal, the first information sent by the network device includes:
sending, by the network device on a first carrier, the first information to the terminal;
in which a plurality of carriers have different subcarrier spacings (SCSs), and the plurality of carriers include the first carrier.

In connection with some embodiments of the second aspect, in some embodiments, the method further includes:
determining, by the network device, according to a minimum SCS among the SCSs of the plurality of carriers, an end position of a first time domain unit corresponding to each carrier.

In connection with some embodiments of the second aspect, in some embodiments, the method further includes:
determining, by the network device, according to an SCS of the first carrier, an end position of a first time domain unit corresponding to a second carrier, in which the plurality of carriers include the second carrier.

In connection with some embodiments of the second aspect, in some embodiments, the second carrier is any one of the plurality of carriers, or an SCS of the second carrier is greater than or equal to the SCS of the first carrier.

In connection with some embodiments of the second aspect, in some embodiments, the method further includes:
determining, by the network device according to an SCS of a second carrier, an end position of a first time domain unit corresponding to the second carrier, in which the SCS of the second carrier is less than an SCS of the first carrier.

According to a third aspect of embodiments of the present disclosure, there is provided a terminal. The terminal includes:
a transceiver module configured to receive first information sent by a network device, in which the first information indicates activation or deactivation of a discontinuous transmission/reception pattern of one or more carriers; and
a processing module configured to determine an effective time of the first information according to a first time domain unit that in which the first information is received.

According to a fourth aspect of embodiments of the present disclosure, there is provided a network device. The network device includes:
a transceiver module configured to send first information to a terminal, in which the first information indicates activation or deactivation of a discontinuous transmission/reception pattern of one or more carriers; and
a processing module configured to determine an effective time of the first information according to a first time domain unit in which the first information is located.

According to a fifth aspect of embodiments of the present disclosure, there is provided a terminal. The terminal includes:
one or more processors,
in which the terminal is configured to perform the method described in the first aspect.

According to a sixth aspect of embodiments of the present disclosure, there is provided a network device. The network device includes:
one or more processors,
in which the network device is configured to perform the method described in the second aspect.

According to a seventh aspect of embodiments of the present disclosure, there is provided a communication system. The communication system includes a network device and a terminal, in which the terminal is configured to implement the method described in the first aspect; and the network device is configured to implement the method described in the second aspect.

According to an eighth aspect of embodiments of the present disclosure, there is provided a storage medium storing instructions that, when running on a communication device, enable the communication device to perform the method described in the first aspect or the second aspect.

According to a ninth aspect of embodiments of the present disclosure, there is provided a program product that, when executed by a communication device, causes the communication device to perform the method described in optional implementations of the first and second aspects.

According to a tenth aspect of embodiments of the present disclosure, there is provided a computer program that, when executed on a computer, causes the computer to perform the method described in optional implementations of the first and second aspects.

According to an eleventh aspect of embodiments of the present disclosure, there is provided a chip or a chip system. The chip or chip system includes a processing circuitry, configured to perform the method described in optional implementations of the first and second aspects.

It may be understood that the above terminal, network device, communication system, storage medium, program product, computer program, chip, or chip system are all used to perform the method in the embodiments of the present disclosure. Therefore, for the beneficial effects that may be achieved by the above subject matters, reference may be made to the beneficial effects achieved by the corresponding methods, details are not repeated here.

The present disclosure provides a method for determining an effective time, a terminal, a network device and a storage medium.

Embodiments of the present disclosure are not exhaustive, but are merely illustrative of some embodiments, and are not intended to be a specific limitation on the scope of protection of the present disclosure. In the absence of contradictions, each step in a certain embodiment may be implemented as an independent embodiment, and the steps may be arbitrarily combined, for example, a solution in which some steps are removed in a certain embodiment may also be implemented as an independent embodiment, and the order of each step in a certain embodiment may be arbitrarily exchanged, and further, optional implementations in a certain embodiment may be arbitrarily combined. Furthermore, various embodiments may be arbitrarily combined, for example, some or all steps of different embodiments may be arbitrarily combined, and a certain embodiment may be arbitrarily combined with optional implementations of other embodiments.

In each embodiment of the present disclosure, if there are no special description and logical conflict, the terms and/or descriptions among the embodiments are consistent and may be referenced to each other, and technical features in different embodiments may be combined to form new embodiments according to their intrinsic logical relationships.

The terms used in embodiments of the present disclosure is for the purpose of describing specific embodiments only, and is not intended to limit the present disclosure.

In embodiments of the present disclosure, unless otherwise specified, elements represented in the singular form, such as "a", "an", "the", "above", "said", "preceding", "this", and the like, may represent "one and only one", or may represent "one or more", "at least one", and the like. For example, in a case where an article such as "a", "an", and "the", in English is used in translation, a noun after the article may be understood as a singular expression or a plural expression.

In embodiments of the present disclosure, "plurality of" refers to two or more.

In some embodiments, terms such as "at least one of", "one or more", "a plurality of", "multiple", may be replaced with each other.

In some embodiments, descriptions such as "at least one of A and B", "A and/or B", "A in one case and B in another", "in response to one case A and in response to another case B" may include the following technical solutions depending on the situation: in some embodiments A (A is executed regardless of B); in some embodiments B (B is executed regardless of A); in some embodiments, one selected from A and B (A and B are selectively executed); in some embodiments A and B (both A and B are executed). The same applies when there are more branches such as A, B, and C.

In some embodiments, descriptions such as "A or B" may include the following technical solutions depending on the situation: in some embodiments, A (A is executed regardless of B); in some embodiments, B (B is executed regardless of A); in some embodiments, one selected from A and B (A and B are selectively executed). The same applies when there are more branches such as A, B, and C.

The prefix words such as "first" and "second" in embodiments of the present disclosure are only for distinguishing different description objects, and do not constitute restrictions on the position, order, priority, quantity, content, etc. of the description objects. For statements of the description objects, please refer to the description of the context in the claims or the embodiments, and should not constitute unnecessary restrictions due to the use of the prefix words. For example, if the description object is a "field", the ordinal number before the "field" in the "first field" and the "second field" does not limit the position or order between the "fields", and "first" and "second" do not limit whether the "fields" modified by them are in the same message, nor do they limit the order of the "first field" and the "second field". For another example, if the description object is "rank", the ordinal number before "rank" in "first rank" and "second rank" does not limit the priority between "rank". For another example, the number of description objects is not limited by ordinal numbers, and may be one or more. Taking "first device" as an example, the number of "devices" may be one or more. Furthermore, objects modified by different prefixes may be the same or different, for example, if the description object is the "device", the "first device" and the "second device" may be the same device or different devices, and the types thereof may be the same or different. For another example, when the description object is "information", the "first information" and the "second information" may be the same information or different information, and the contents thereof may be the same or different.

In some embodiments, terms such as "including A", "containing A", "for indicating A", "carrying A", may be interpreted as directly carrying A, or may be interpreted as indirectly indicating A.

In some embodiments, terms such as "in response to", "in response to determining", "in a case where", "when", "upon", "if", and the like may be replaced with each other.

In some embodiments, terms such as "greater than", "greater than or equal to", "not smaller than", "more than", "more than or equal to", "not lower than", "higher", "higher than or equal to", "not less than", "above" and the like may be replaced with each other, and terms such as "smaller than", "smaller than or equal to", "not greater than", "less than", "less than or equal to", "not more than", "lower than", "lower than or equal to", "not higher than", "below" and the like may be replaced with each other.

In some embodiments, the apparatus and the device may be interpreted as physical or virtual, and the names thereof are not limited to those described in embodiments, and may be understood as "equipment", "device", "circuit", "network element", "node", "function", "unit", "section", "system", "network", "chip", "chip system", "entity", "body", and the like in some situations.

In some embodiments, the "network" may be interpreted as an apparatus included in the network, for example, an access network device, a core network device, or the like.

In some embodiments, the "access network device (AN device)" may also be referred to as "a radio access network device (RAN device)", "a base station (BS)", "a radio base station", "a fixed station", may also be understood in some embodiments as "a node", "an access point", "a transmission point (TP)", "a reception point (RP)", "a transmission/reception point (TRP)", "a panel", "an antenna panel", "an antenna array", "a cell", "a macro cell", "a small cell", "a femto cell", "a pico cell", "a sector", "a cell group", "a service cell", "a carrier", "a component carrier", "a bandwidth part (BWP)", etc.

In some embodiments, "a terminal" or "a terminal device" may be referred to as "a user equipment (UE)", "a user terminal", "a mobile station (MS)", "a mobile terminal (MT)", a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client and the like.

In some embodiments, obtaining data, information and the like may comply with laws and regulations of the country where it is located.

In some embodiments, data, information, and the like may be obtained after obtaining the user's consent.

Further, each element, each row, or each column in the table of embodiments of the present disclosure may be implemented as an independent embodiment, and any combination of any element, any row, or any column may also be implemented as an independent embodiment.

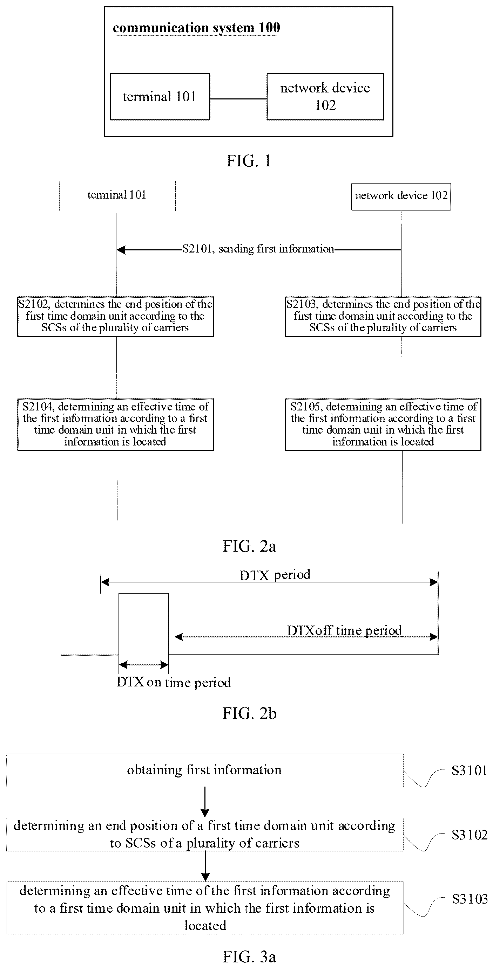

FIG. 1 is a schematic diagram illustrating an architecture of a communication system according to embodiments of the present disclosure.

As shown in FIG. 1, the communication system 100 includes a terminal 101 and a network device 102. The terminal 101 is configured to receive information sent by the network device for activating or activating a discontinuous pattern of one or more carriers, and determine an effective time of the information according to a time domain unit in which the information is received. The network device 102 is configured to send to the terminal 101 the information for activating or activating the discontinuous pattern of one or more carriers, and determine the effectiveness of the information according to the time domain unit in which the information is sent. The time domain unit in which the network device 102 sends the information is the same as the time domain unit in which the terminal 101 receives the information, that is, the time domain unit in which the information is located. Therefore, the network device 102 and the terminal 101 may determine the same effective time, or have a consistent understanding of the effective time.

A communication connection may be established between the terminal 101 and the network device 102, such that the terminal 101 is connected to the Internet via the network device 102. For example, the network device 102 includes an access network device, and the terminal 101 is connected to a core network device via the access network device, and is further connected to the Internet via the core network device.

In some embodiments, the terminal 101 may include, for example, at least one of a mobile phone, a wearable device, an Internet of Things device, an automobile with a communication function, a smart car, a pad, a computer with a wireless transmission and reception function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, and a wireless terminal device in smart home, which is not limited in the present disclosure.

In some embodiments, the network device 102 may include at least one of the access network device or the core network device.

In some embodiments, the access network device may be, for example, a node or device that accesses a terminal to a wireless network, and the access network device may include at least one of an evolved NodeB (eNB), a next generation eNB (ng-eNB), a next generation NodeB (gNB), a node B (NB), a home node B (HNB), a home evolved nodeB (HeNB), a radio backhaul device, a radio network controller (RNC), a base station controller (BSC), a base transceiver station (BTS), a base band unit (BBU), a mobile switching center, a base station in a 6G communication system, an open base station (RAN), a cloud base station (Cloud RAN), a base station in another communication system, and an access node in a wireless fidelity (Wi-Fi) system, which is not limited in the present disclosure.

In some embodiments, the technical solution of the present disclosure may be applied to an Open RAN architecture. Moreover, an interface between or within the access network device according to embodiments of the present disclosure may be changed to an internal interface of an Open RAN, and the flow and information interaction between the internal interfaces may be implemented by software or a program.

In some embodiments, the access network device may be composed of a central unit (CU) and a distributed unit (DU), in which the CU may also be referred to as a control unit, and the protocol layer of the access network device may be separated by adopting the structure of the CU-DU, some functions of the protocol layer are centrally controlled by the CU, and some or all functions of the remaining protocol layer are distributed in the DU, and the DU is centrally controlled by the CU, but is not limited to this.

In some embodiments, the core network device may be one device including one or more network elements, or may be multiple devices or groups of devices including all or part of the above one or more network elements, respectively. The network element may be virtual or physical. The core network includes, for example, at least one of an evolved packet core (EPC), a 5G core network (5GCN), and a next generation core (NGC).

It may be understood that the communication system described in embodiments of the present disclosure is to more clearly explain the technical solution of embodiments of the present disclosure, and does not constitute a limitation on the technical solution provided by embodiments of the present disclosure. As those skilled in the art know, with the evolution of the system architecture and the emergence of new business scenarios, the technical solution provided by embodiments of the present disclosure is applicable to similar technical problems.

The following embodiments of the present disclosure may be applied to the communication system 100 illustrated in FIG. 1 or a part of the body, which is not limited in embodiments of the present disclosure.

Each body shown in FIG. 1 is an example, and the communication system may include all or some of the bodies shown in FIG. 1, or other bodies other than those shown in FIG. 1, the number and form of the bodies are arbitrary, the connection relationship between the bodies is an example, and the bodies may not be connected or connected, and the connection may be any form, including direct connection or indirect connection, wired connection or wireless connection.

Embodiment of the present disclosure may be applied to long term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), and IEEE 802.20, ultra-wideband (UWB), Bluetooth (registered trademark), public land mobile network (PLMN) networks, device-to-device (D2D) systems, machine-to-machine (M2M) systems, Internet of Things (IoT) systems, vehicle-to-everything (V2X) systems, systems utilizing other communication methods, and next-generation systems built upon them and the like. Moreover, multiple systems may be combined (e.g., a combination of LTE or LTE-A with 5G) for application.

In embodiments of the present disclosure, the network device 102 may activate or deactivate cell DTX or cell DRX of one or more carriers for the terminal 101. The cell DTX or the cell DRX is turned on after the network device 102 activates the cell DTX or the cell DRX on a certain carrier for the terminal. After the base station activates the cell DTX or the cell DRX on the certain carrier for the terminal, the cell DTX or the cell DRX is turned off.

In embodiments of the present disclosure, a method for determining an effective time of a related activation or deactivation instruction is provided.

FIG. 2a is an interactive schematic diagram illustrating a method for determining an effective time according to embodiments of the present disclosure. As shown in FIG. 2a, embodiments of the present disclosure relate to a method for determining an effective time, and the method includes the following steps.

**In step S2101,** a network device 102 sends first information to a terminal 101.

In some embodiments, the first information may be indication information.

In some embodiments, the network device 102 may send downlink control information (DCI), and the DCI includes the first information.

In some embodiments, the network device 102 may send via a higher layer signaling. For example, the network device 102 sends a media-access-control control element (MAC CE), and the MAC CE includes the first information.

In some embodiments, the first information indicates activation or deactivation of a discontinuous transmission/reception pattern of one or more carriers.

In an example, the first information may occupy one or more bits, for example, the first information uniformly indicates whether the discontinuous transmission/reception pattern is activated for the respective carriers by a value of one bit. For another example, the first information includes a plurality of bits in a one-to-one correspondence with respective carriers to indicate whether the discontinuous transmission/reception pattern is activated for each various carrier.

In an example, the discontinuous transmission/reception pattern includes any of:
a DTX on-off pattern; or
a DRX on-off pattern.

In an example, each terminal 101 may be configured with at least one carrier, and each carrier may be configured with the discontinuous transmission/reception pattern. For example, each carrier is configured with the DTX pattern, or with the DRX pattern, or with both the DTX pattern and the DRX pattern.

In an example, the discontinuous transmission/reception pattern may be aperiodic or periodic.

For example, for an aperiodic discontinuous transmission/reception pattern, the network device 102 may dynamically indicate a time domain parameter of an active period of the discontinuous transmission/reception pattern.

For another example, for a periodic discontinuous transmission/reception pattern, the network device 102 may configure a time domain parameter of the periodic discontinuous transmission/reception pattern for each carrier of the terminal 101 via a UE specific signaling. One discontinuous transmission/reception period may include a first time period and a second time period. The first time period is a time period in which the network device 102 normally sends or receives data, or the first time period is a time period in which the network device 102 is in an active time period (or active period), and the first period may also be referred to as an on duration or an on time period. The second time period is a time period in which the network device 102 may not send or receive part of data, or the second time period is a time period in which the network device 102 is in a non-active time period (or non-active period), and the second period may also be referred to as an off duration or an off time period. It may be understood that, in one discontinuous transmission/reception period, the active time period may include other time periods in addition to the first time period, for example, the active time period includes: the first time period and an operation time period of a specific timer. The specific timer may for example include a retransmission related timer operating in a period.

In an example, one DTX period includes a first time period, i.e., a DTX-on time period, and a second time period, i.e., a DTX-off time period. During the DTX-on time period, the network device 102 may normally send a downlink channel, and during the DTX-off time period, the network device 102 may not send a part of the downlink channel, to achieve energy-saving of the network device. In this example, referring to a periodic DTX pattern shown in FIG. 2b, the network device 102 may configure at least one of the following time domain parameters of a cell DTX pattern: a period, a time domain offset, a length of the DTX-on time period or a length of the DTX-off time period. In this example, the behavior of the network device 102 during a period of the DTX pattern may have an impact on a reception behavior of the terminal 101. For example, the terminal 101 may not receive a part of the downlink channel during the DTX-off time period.

In another example, one DRX period includes a first time period, i.e., a DRX-on time period, and a DTX-off time period. During the DTX-on time period, the network device 102 may normally receive an uplink channel, and during the DTX-off time period, the network device 102 may not receive a part of the uplink channel, to achieve energy-saving of the network device. In this example, the network device 102 may configure at least one of the following time domain parameters of a DRX pattern: a period, a time domain offset, a length of the DTX-on time period or a length of the DTX-off time period. In this example, the behavior of the network device 102 during a DRX period may have an impact on a sending behavior of the terminal 101. For example, the terminal 101 may pause sending or not sending the part of the uplink channel during the DRX-off time period.

In an example, the network device 102 may configure the time domain parameter related to the discontinuous transmission/reception pattern in units of carriers or cells. One carrier may also be understood as one cell. The configuration of DTX or DRX is common to this cell.

In some embodiments, the terminal 101 receives the first information to know whether the discontinuous transmission/reception pattern of the configured carrier is activated or deactivated.

In some embodiments, in a case where a plurality of carriers have different SCSs, step S2101 may include the following step S2101'.

In step S2101', the network device 102 receives the first information sent by the network device 102 on a first carrier.

In an example, the first carrier may be referred to as a certain carrier among the plurality of carriers. In this embodiment, the first information about the activation or deactivation of the discontinuous transmission/reception pattern of the plurality of carriers may be sent only on one of the plurality of carriers, and the one carrier is denoted as the first carrier.

In an example, the terminal 101 detects and receives the first information on the first carrier.

In some embodiments, before step S2101 or S2101', the method may further include the following step S2100.

In step S2100, the network device 102 determines or configures the first information.

In an example, the network device 102 may configure the corresponding first information for each terminal 101, or configure the same first information for a plurality of terminals 101.

**In step S2102,** the terminal 101 determines an end position of a first time domain unit according to the SCSs of the plurality of carriers.

In some embodiments, the plurality of carriers have different SCSs, and time domain units corresponding to the respective carriers are different. For example, taking the time domain unit as a slot as an example, the less SCS the carrier, the longer the corresponding slot; the larger SCS the carrier, the shorter the corresponding slot.

In an example, the first time domain unit is a slotN as an example. The terminal 101 receives, on a first carrier and within the slotN, the first information. The first information is suitable for indicating the activation or deactivation of the discontinuous transmission/reception pattern of the plurality of carriers. In a case where the plurality of carriers have the different SCSs, lengths of the slotN are different from each other. In order for the terminal 101 to reasonably determine the effective time corresponding to each carrier, the terminal 101 may determine the end position of the first time domain unit, such as the slotN, according to a slot length of a certain carrier, such that there may be a consistent understanding of the end position of the first time domain unit in a case where the plurality of carriers have the different SCSs.

In a first example, the terminal 101 determines the end position of the first time domain unit corresponding to each carrier according to a minimum SCS among the SCSs of the plurality of carriers.

In an example, a slot corresponding to a carrier with the minimum SCS is the longest, and the terminal 101 may determine the length of the first time domain unit slotN according to the longest slot, that is, may determine an end position of the slotN, thereby facilitating the determination of the effective time in step S2103.

In a second example, the terminal 101 determines an end position of a first time domain unit corresponding to a second carrier according to an SCS of the first carrier, in which the plurality of carriers include the second carrier.

In an example, the second carrier is any one of the plurality of carriers. That is, for any carrier, the end position of the first time domain unit slotN may be determined according to the slot length corresponding to the first carrier.

In an example, an SCS of the second carrier is greater than or equal to the SCS of the first carrier. That is, in a case where the SCS of the second carrier is greater than or equal to the SCS of the first carrier, the end position of the first time domain unit slotN is determined according to the slot length corresponding to the first carrier.

In a third example, in a case where the SCS of the second carrier is less than the SCS of the first carrier, the terminal 101 determines an end position of a first time domain unit corresponding to the second carrier according to the SCS of the second carrier.

In an example, for a carrier with the SCS being less than the SCS of the first carrier, the terminal 101 may determine the end position of the first time domain unit slotN according to the slot length corresponding to the less SCS.

**In step S2103,** the network device 101 determines the end position of the first time domain unit according to the SCSs of the plurality of carriers.

In some embodiments, for the method in which the network device 101 determines the end position, reference may be made to the related operation of the terminal 101 in step S2102, and details are not be repeated here.

**In step S2104,** the terminal 101 determines the effective time of the first information according to the first time domain unit in which the first information is located.

In some embodiments, the first time domain unit may be a slot, a symbol, or a duration.

In some embodiments, the effective time is a time when an activation or deactivation instruction corresponding to the first information takes effect, at which time a discontinuous transmission/reception pattern of the relevant carrier indicated by the first information is to be activated or deactivated.

In an example, the first time domain unit in which the first information is located may be a time domain unit in which the terminal 101 receives the first information.

In some embodiments, the effective time is after the end position of the first time domain unit, in which the discontinuous transmission/reception pattern is periodic.

For example, taking the first time domain unit as the slotN as an example, the terminal 101 receives the first information at the slotN, and the effective time of the first information is after slotN.

In an example, in a case where the discontinuous transmission/reception pattern is periodic, a discontinuous transmission/reception period of the discontinuous transmission/reception pattern may include the first time period and the second time period described in the foregoing embodiment.

In a first example, the effective time is spaced from the end position by a first duration, and the first duration is greater than or equal to 0.

For example, the first time domain unit is the slotN, and in a case where the first duration T1 is equal to 0, the effective time is slot (N+1); in a case where the first duration T1 is greater than 0, the first duration T1 may be in units of slots or milliseconds (ms).

This example may be applicable to a scenario where the first information is an instruction indicating activation or deactivation of a DTX pattern or a DRX pattern of a carrier.

In a second example, the effective time is a start time of a first discontinuous transmission/reception period after a second duration from the end position, and the second duration is greater than or equal to 0.

In an example, in a case where the second duration T2 is greater than 0, the second duration T2 may be in units of slots or milliseconds.

In an example, the first discontinuous transmission/reception period may be a DTX period or a DRX period. For example, the first time domain unit is the slotN, and the effective time is a start time of the first DTX period or the first DRX period after the second duration from the slotN.

In an example, each discontinuous transmission/reception period includes a first time period and a second time period, a start time of the discontinuous transmission/reception period is a start time of the first time period or a start time of the second time period, and an end time of the discontinuous transmission/reception period is an end time of the second time period or an end time of the first time period; and the first time period is a time period in which the network device sends downlink information or receives uplink information in the discontinuous transmission/reception period, and the second time period is a time period in which the network device is not able to send part of the downlink information or receive part of the uplink information.

Referring to the description of the foregoing embodiments, the start time of the DTX period may be the start time of the first time period, i.e., the DTX-on time period, in the DTX period, or the start time of the DTX-off time period in the DTX period. The end time of the DTX period may be the end time of the DTX-off time period in the DTX period or the end time of the DTX-on time period in the DTX period. It may be understood that this is related to an order in which the DTX-on time period and the DTX-off time period in one DTX period are configured in the time domain. In an example, if the start time of the DTX period is defined as the start time of the DTX-on time period in the DTX period, correspondingly, the end time of the DTX period is the end time of the DTX-off time period. In another example, if the start time of the DTX period is defined as the start time of the DTX-off time period in the DTX period, correspondingly the end time of the DTX period is the end time of the DTX-on time period.

Similarly, the start time of the DRX period may be the start time of the DRX-on time period in the DRX period or the start time of the DRX-off time period in the DRX period, and the end time of the DRX period may be the end time of the DRX-off time period in the DRX period or the end time of the DRX-on time period in the DRX period. It may be understood that this is related to an order in which the DRX-on time period and the DRX-off time period in one DRX period are configured in the time domain. In an example, if the start time of the DRX period is defined as the start time of the DRX-on time period in the DRX period, correspondingly the end time of the DRX period is the end time of the DRX-off time period. In another example, if the start time of the DRX period is defined as the start time of the DRX-off time period in the DRX period, correspondingly, the end time of the DRX period is the end time of the DRX-on time period.

This example may be applicable to a scenario where the first information is an instruction indicating activation or deactivation of a DTX pattern or a DRX pattern of a carrier.

In a third example, the effective time is an end time of a discontinuous transmission/reception period of the discontinuous transmission/reception pattern in which a third duration after the end position is located, and the third duration is greater than or equal to 0.

In an example, in a case where the third duration T3 is greater than 0, the third duration T3 may be in units of slots or milliseconds.

In an example, for the end time of the discontinuous period, reference may be made to the description of the above example.

This example may be applicable to a scenario where the first information is an instruction indicating activation or deactivation of a DTX pattern or a DRX pattern of a carrier.

In a fourth example, the first information indicates to deactivate the discontinuous transmission/reception pattern of the one or more carriers, and the effective time is an end time of a first time period in a discontinuous transmission/reception period in which the first time domain unit is located; and the first time period is a time period in which the network device 102 sends downlink information or receives uplink information in the discontinuous transmission/reception period.

In an example, the first time period may be a time period in which the network device 102 is in an active state. Referring to the description of the foregoing embodiments, for example, in the DTX period, the first time period may be referred to as a DTX-on time period, and the second time period may be referred to as a DTX-off time period. For another example, in the DRX period, the first time period may be referred to as a DRX-on time period, and the second time period may be referred to as a DRX-off time period.

In this example, the first information may indicate to deactivate the DTX pattern of the carrier. In a case where the network device 102 sends the first information, the network device 102 needs to be in the DTX-on time period, and the first information is used to deactivate the DTX pattern, that is, used to enable the network device 102 to restore to a normal downlink sending state, and the effective time of the first information may be an end of the current DTX-on time period, that is, the end time of the DTX-on time period in which the network device 102 sends the first information.

In this example, the first information may be used to deactivate the DRX pattern. The first information is used to enable the network device 102 to restore to a normal reception state, and the terminal 101 may normally performing uplink sending. In a case where a sending time of the first information is in the DRX-on time period of the DRX period, the effective time of the first information may be the end time of the DRX-on time period in which the first information is sent.

**In step S2105,** the network device 102 determines the effective time of the first information according to the first time domain unit in which the first information is located.

In some embodiments, the first time domain unit in which the first information is located is, for example, a time when the network device 102 sends the first information.

In some embodiments, the time when the network device 102 sends the first information is within the same time domain unit, such as the first time domain unit, as the time when the terminal 101 receives the first information.

In some embodiments, for the method for determining the effective time by the network device 102, reference may be made to the related operation of the terminal 101 in step S2104, and details are not repeated here.

In some embodiments, in a case where the first information indicates to activate the discontinuous transmission/reception pattern, such as the DTX pattern, on the one or more carriers, the network device 102 may run or start the DTX pattern on the corresponding carrier from the effective time of the first information according to the first information, and may not send part of the downlink information within the second time period in the DTX period, which may achieve energy-saving.

In some embodiments, in a case where the first information indicates to activate the discontinuous transmission/reception pattern, such as the DRX pattern, on the one or more carriers, the network device 102 may run or start the DRX pattern on the corresponding carrier from the effective time of the first information according to the first information, and may not receive part of the uplink information within the second time period in the DRX period, which may achieve energy-saving.

In some embodiments, the names of information and the like are not limited to the names described in embodiments. Terms such as "information", "message", "signal", "signaling", "report", "configuration", "indication", "instruction", "command", "channel", "parameter", "domain", and "field" may be used interchangeably.

In some embodiments, "acquisition", "obtaining", "getting", "receiving", "transmitting", "bidirectional transmission", and "sending and/or receiving" may be used interchangeably, and may be interpreted as having various meanings such as receiving from other subjects, obtaining from protocols, obtaining from higher layers, obtaining by self-processing, and autonomous implementation.

In some embodiments, terms such as "sending", "transmitting", "reporting", "distributing", "transmission", "bidirectional transmission", and "sending and/or receiving" may be used interchangeably.

In some embodiments, terms such as "up", "uplink", and "physical uplink" may be used interchangeably, terms such as "down", "downlink", and "physical downlink" may be used interchangeably, and terms such as "side", "sidelink", "side communication", "sidelink communication", "direct connection", "direct link", "direct communication", and "direct link communication" may be used interchangeably.

In some embodiments, terms such as "downlink control information (DCI)", "downlink (DL) assignment", "DL DCI", "uplink (UL) grant", and "UL DCI" may be used interchangeably.

In some embodiments, terms such as "physical downlink shared channel (PDSCH)" and "DL data" may be used interchangeably, and terms such as "physical uplink shared channel (PUSCH)" and "UL data" may be used interchangeably.

In some embodiments, terms such as "component carrier (CC)", "cell", "frequency carrier" and "carrier frequency" may be used interchangeably.

In some embodiments, terms such as "certain", "preset", "default", "set", "indicated", "a certain", "any" and "first" may be used interchangeably. Terms such as "certain A", "preset A", "default A", "set A", "indicated A", "a certain A", "any A" and "first A" may be interpreted as A pre-defined in a protocol or the like, or as A obtained through setting, configuration, or indication, or as specific A, a certain A, any A, or first A, but are not limited to this.

In some embodiments, the determination or determination may be made by a value (0 or 1) represented by 1 bit, or by a Boolean value represented by true or false, or by a comparison of numerical values (for example, a comparison with a predetermined value), but is not limited to this.

In some embodiments, "not expecting to receive" may be interpreted as not receiving on time domain resources and/or frequency domain resources, or as not performing subsequent processing on the data after receiving it; "not expecting to send" may be interpreted as not sending, or as sending but not expecting the receiver to respond to the sent content.

The communication method according to embodiments of the present disclosure may include at least one of step S2101 to step S2105. For example, step S2101 may be implemented as an independent embodiment, steps S2101 to S2102 may be implemented as an independent embodiment, steps S2101 and S2103 may be implemented as an independent embodiment, steps S2101 and S2104 may be implemented as an independent embodiment, and steps S2101, S2102 and S2104 may be implemented as an independent embodiment, but are not limited to this.

In some embodiments, steps S2102 and S2103 are optional, and one or more of these steps may be omitted or replaced in different embodiments.

In some embodiments, an order of steps S2102 and S2103 may be performed interchangeably or synchronously.

In some embodiments, an order of steps S2104 and S2105 may be performed interchangeably or synchronously.

In some embodiments, reference may be made to other optional implementations described before or after the specification corresponding to FIG. 2a.

FIG. 3a is a flowchart illustrating a method according to embodiments of the present disclosure. As shown in FIG. 3a, embodiments of the present disclosure relate to a method for determining an effective time, and the method includes the following steps.

**In step S3101,** a terminal 101 obtains first information.

In some embodiments, the terminal 101 may receive the first information sent by the network device 102, or receive or obtain the first information from other subjects.

In some embodiments, for the related implementation of step S3101, reference may be made to the related implementation of step S2101, details are not repeated here.

**In step S3102,** the terminal 101 determines an end position of a first time domain unit according to SCSs of plurality of carriers.

In some embodiments, for the related implementation of step S3102, reference may be made to the related implementation of step S2102, details are not repeated here.

**In step S3103,** the terminal 101 determines the effective time of the first information according to the first time domain unit in which the first information is received.

In some embodiments, for the related implementation of step S3103, reference may be made to the related implementation of step S2104, details are not repeated here.

The communication method according to embodiments of the present disclosure may include at least one of steps S3101 to S3103. For example, step S3101 may be implemented as an independent embodiment, steps S3101 to S3102 may be implemented as an independent embodiment, and steps S3101 and S3103 may be implemented as an independent embodiment, but are not limited to this.

In some embodiments, step S2102 is optional, and one or more of these steps may be omitted or replaced in different embodiments.

In some embodiments, reference may be made to other optional implementations described before or after the specification corresponding to FIG. 3a.

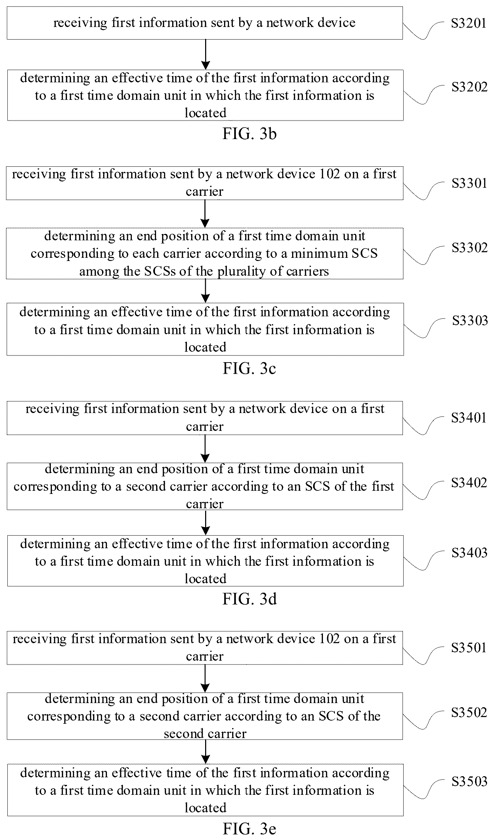

FIG. 3b is a flowchart illustrating a method according to embodiments of the present disclosure. As shown in FIG. 3b, embodiments of the present disclosure relate to a method for determining an effective time, and the method includes the following steps.

**In step S3201,** a terminal 101 receives first information sent by a network device 102.

In some embodiments, for the related implementation of step S3201, reference may be made to the related implementation of steps S2101 and S3101, and details are not repeated here.

In some embodiments, the first information indicates activation or deactivation of a discontinuous transmission/reception pattern of one or more carriers.

In an example, the discontinuous transmission/reception pattern includes any of:
a DTX pattern; or
a DRX pattern.

**In step S3202,** the terminal 101 determines an effective time of the first information according to a first time domain unit in which the first information is located.

In some embodiments, the related implementation of step S3202, reference may be made to the related implementation of steps S2104 and S3103, and details are not repeated here.

In some embodiments, the effective time is after an end position of the first time domain unit, in which the discontinuous transmission/reception pattern is periodic.

In an example, the effective time is spaced from the end position by a first duration, and the first duration is greater than or equal to 0.

In an example, the effective time is a start time of a first discontinuous transmission/reception period after a second duration from the end position, and the second duration is greater than or equal to 0.

In an example, the effective time is an end time of a discontinuous transmission/reception period in which a third duration after the end position is located, and the third duration is greater than or equal to 0.

In an example, the first information indicates to deactivate the discontinuous transmission/reception pattern of the one or more carriers, and the effective time is an end time of a first time period in a discontinuous transmission/reception period in which the first time domain unit is located; and the first time period is a time period in which the network device sends downlink information or receives uplink information in the discontinuous transmission/reception period.

In some embodiments, the discontinuous transmission/reception period of the discontinuous transmission/reception pattern includes a first time period and a second time period, a start time of the discontinuous transmission/reception period is a start time of the first time period or a start time of the second time period, and an end time of the discontinuous transmission/reception period is an end time of the second time period or an end time of the first time period; and
the first time period is a time period in which the network device sends downlink information or receives uplink information in the discontinuous transmission/reception period, and the second time period is a time period in which the network device is not able to send part of the downlink information or receive part of the uplink information.

In embodiments of the present disclosure, the terminal 101 receives the first information sent by the network device 102, and may determine the effective time of the first information according to the time domain unit in which the first information is received, such that an opportunity of activation or deactivation of the discontinuous transmission/reception pattern of the corresponding carrier may be obtained in time, which is beneficial for adaptively adjusting its own transmission/reception behavior in conjunction with the discontinuous transmission/reception pattern.

FIG. 3c is a flowchart illustrating a method according to embodiments of the present disclosure. As shown in FIG. 3c, embodiments of the present disclosure relate to a method for determining an effective time, and the method includes the following steps.

**In step S3301,** a terminal 101 receives first information sent by a network device 102 on a first carrier.

In some embodiments, for the related implementation of step S3301, reference may be made to the related implementation of steps S2101, S3101 and S3201, and details are not repeated here.

In some embodiments, in a case where a plurality of carriers have different SCSs, the terminal 101 receives the first information sent by the network device 102 on the first carrier, and the plurality of carriers include the first carrier.

**In step S3302,** the terminal 101 determines an end position of a first time domain unit corresponding to each carrier according to a minimum SCS among the SCSs of the plurality of carriers.

In some embodiments, for the related implementation of step S3302, reference may be made to the related implementation of steps S2102 and S3102, and details are not be repeated here.

**In step S3303,** the terminal 101 determines an effective time of the first information according to the first time domain unit in which the first information is received.

In some embodiments, for the related implementation of step S3303, reference may be made to the related implementation of steps S2104, S3103 and S3202, and details are not be repeated here.

In some embodiments, the effective time is after an end position of the first time domain unit, in which the discontinuous transmission/reception pattern is periodic.

In an example, the effective time is spaced from the end position by a first duration, and the first duration is greater than or equal to 0.

In an example, the effective time is a start time of a first discontinuous transmission/reception period after a second duration from the end position, and the second duration is greater than or equal to 0.

In an example, the effective time is an end time of a discontinuous transmission/reception period in which a third duration after the end position is located, and the third duration is greater than or equal to 0.

In an example, the first information indicates to deactivate the discontinuous transmission/reception pattern of the one or more carriers, and the effective time is an end time of a first time period in a discontinuous transmission/reception period in which the first time domain unit is located; and the first time period is a time period in which the network device sends downlink information or receives uplink information in the discontinuous transmission/reception period.

FIG. 3d is a flowchart illustrating a method according to embodiments of the present disclosure. As shown in FIG. 3d, embodiments of the present disclosure relate to a method for determining an effective time, and the method includes the following steps.

**In step S3401,** a terminal 101 receives first information sent by a network device 102 on a first carrier.

In some embodiments, for the related implementation of step S3401, reference may be made to the related implementation of steps S2101, S3101 and S3201, and details are not be repeated here.

In some embodiments, plurality of carriers have different SCSs.

**In step S3402,** the terminal 101 determines an end position of a first time domain unit corresponding to a second carrier according to an SCS of the first carrier.

In some embodiments, for the related implementation of step S3302, reference may be made to the related implementation of steps S2102 and S3102, and details are not be repeated here.

The plurality of carriers include the second carrier.

In some embodiments, the second carrier may be any one of the plurality of carriers, or
an SCS of the second carrier is greater than or equal to the SCS of the first carrier.

**In step S3403,** the terminal 101 determines an effective time of the first information according to the first time domain unit in which the first information is received.

In some embodiments, for the related implementation of step S3403, reference may be made to the related implementation of steps S2104, S3103 and S3202, and details are not be repeated here.

In some embodiments, the effective time is after an end position of the first time domain unit, in which the discontinuous transmission/reception pattern is periodic.

In an example, the effective time is spaced from the end position by a first duration, and the first duration is greater than or equal to 0.

In an example, the effective time is a start time of a first discontinuous transmission/reception period after a second duration from the end position, and the second duration is greater than or equal to 0.

In an example, the effective time is an end time of a discontinuous transmission/reception period in which a third duration after the end position is located, and the third duration is greater than or equal to 0.

In an example, the first information indicates to deactivate the discontinuous transmission/reception pattern of the one or more carriers, and the effective time is an end time of a first time period in a discontinuous transmission/reception period in which the first time domain unit is located; and the first time period is a time period in which the network device sends downlink information or receives uplink information in the discontinuous transmission/reception period.

FIG. 3e is a flowchart illustrating a method according to embodiments of the present disclosure. As shown in FIG. 3e, embodiments of the present disclosure relate to a method for determining an effective time, and the method includes the following steps.

**In step S3501,** a terminal 101 receives first information sent by a network device 102 on a first carrier.

In some embodiments, for the related implementation of step S3501, reference may be made to the related implementation of steps S2101, S3101 and S3201, and details are not be repeated here.

In some embodiments, plurality of carriers have different SCSs.

**In step S3502,** the terminal 101 determines an end position of a first time domain unit corresponding to a second carrier according to an SCS of the second carrier.

In some embodiments, for the related implementation of step S3502, reference may be made to the related implementation of steps S2102 and S3102, and details are not be repeated here.

In some embodiments, in a case where the SCS of the second carrier is less than an SCS of the first carrier, the terminal 101 determines the end position of the first time domain unit corresponding to the second carrier according to the SCS of the second carrier.

**In step S3503,** the terminal 101 determines an effective time of the first information according to the first time domain unit in which the first information is received.

In some embodiments, for the related implementation of step S3503, reference may be made to the related implementation of steps S2104, S3103 and S3202, and details are not be repeated here.

In some embodiments, the effective time is after an end position of the first time domain unit, in which the discontinuous transmission/reception pattern is periodic.

In an example, the effective time is spaced from the end position by a first duration, and the first duration is greater than or equal to 0.

In an example, the effective time is a start time of a first discontinuous transmission/reception period after a second duration from the end position, and the second duration is greater than or equal to 0.

In an example, the effective time is an end time of a discontinuous transmission/reception period in which a third duration after the end position is located, and the third duration is greater than or equal to 0.

In an example, the first information indicates to deactivate the discontinuous transmission/reception pattern of the one or more carriers, and the effective time is an end time of a first time period in a discontinuous transmission/reception period in which the first time domain unit is located; and the first time period is a time period in which the network device sends downlink information or receives uplink information in the discontinuous transmission/reception period.

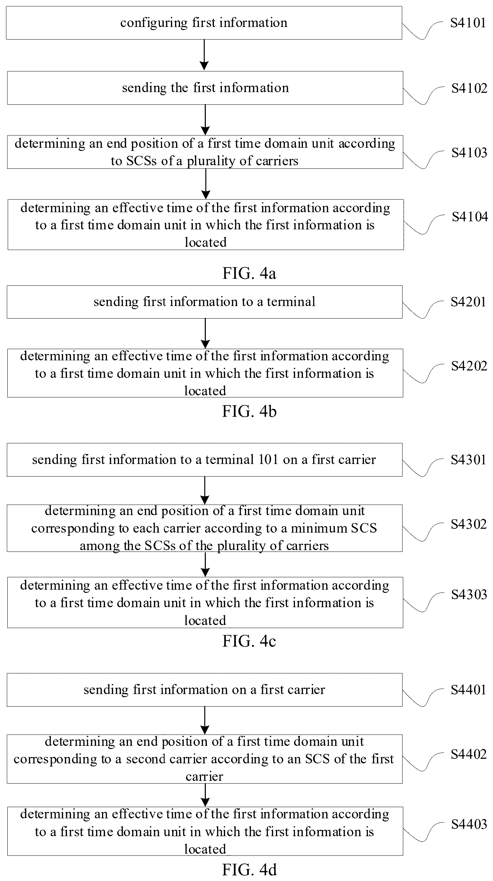

FIG. 4a is a flowchart illustrating a method according to embodiments of the present disclosure. As shown in FIG. 4a, embodiments of the present disclosure relate to a method for determining an effective time, and the method includes the following steps.

**In step S4101,** a network device 102 configures first information.

In some embodiments, for the related implementation of step S4101, reference may be made to the related implementation of step S2100, details are not repeated here.

**In step S4102,** the network device 102 sends the first information.

In some embodiments, the network device 102 may send the first information to the terminal 101 or send the first information to other subjects.

In some embodiments, for the related implementation of step S4102, reference may be made to the related implementation of step S2101, details are not repeated here.

**In step S4103,** the network device 102 determines an end position of a first time domain unit according to SCSs of a plurality of carriers.

In some embodiments, for the related implementation of step S4103, reference may be made to the related implementation of step S2103, and details are not be repeated here.

**In step S4104,** the network device 102 determines an effective time of the first information according to a first time domain unit in which the first information is located.

In some embodiments, for the related implementation of step S4104, reference may be made to the related implementation of step S2105, details are not repeated here.

The communication method according to embodiments of the present disclosure may include at least one of steps S4101 to S4104. For example, step S4101 may be implemented as an independent embodiment, steps S4102 to S4103 may be implemented as an independent embodiment, and steps S4102 and S4104 may be implemented as an independent embodiment, but it is not limited to this.

In some embodiments, steps S4101 and S4103 are optional, and one or more of these steps may be omitted or replaced in different embodiments.

In some embodiments, reference may be made to other optional implementations described before or after the specification corresponding to FIG. 4a.

FIG. 4b is a flowchart illustrating a method according to embodiments of the present disclosure. As shown in FIG. 4b, embodiments of the present disclosure relate to a method for determining an effective time, and the method includes the following steps.

**In step S4201,** a network device 102 sends first information to a terminal 101.

In some embodiments, for the related implementation of step S4201, reference may be made to the related implementation of steps S2101 and S4102, and details are not be repeated here.

In some embodiments, the first information indicates activation or deactivation of a discontinuous transmission/reception pattern of one or more carriers.

**In step S4202,** the network device 102 determines an effective time of the first information according to a first time domain unit in which the first information is located.

In some embodiments, for the related implementation of step S4202, reference may be made to the related implementation of steps S2104 and S4104, and details are not be repeated here.

In some embodiments, the effective time is after an end position of the first time domain unit, in which the discontinuous transmission/reception pattern is periodic.

In an example, the effective time is spaced from the end position by a first duration, and the first duration is greater than or equal to 0.

In an example, the effective time is a start time of a first discontinuous transmission/reception period after a second duration from the end position, and the second duration is greater than or equal to 0.

In an example, the effective time is an end time of a discontinuous transmission/reception period in which a third duration after the end position is located, and the third duration is greater than or equal to 0.

In an example, the first information indicates to deactivate the discontinuous transmission/reception pattern of the one or more carriers, and the effective time is an end time of a first time period in a discontinuous transmission/reception period in which the first time domain unit is located; and the first time period is a time period in which the network device sends downlink information or receives uplink information in the discontinuous transmission/reception period.

In some embodiments, one discontinuous transmission/reception period includes a first time period and a second time period, a start time of the discontinuous transmission/reception period is a start time of the first time period or a start time of the second time period, and an end time of the discontinuous transmission/reception period is an end time of the second time period or an end time of the first time period; and

the first time period is a time period in which the network device sends downlink information or receives uplink information in the discontinuous transmission/reception period, and the second time period is a time period in which the network device is not able to send part of the downlink information or receive part of the uplink information.

In embodiments of the present disclosure, the network device 102 sends the first information to the terminal 101, and may determine the effective time of the first information according to the first time domain unit in which the first information is located, such that the network device 102 and the terminal 101 may determine the same effective time according to the first information, to enable the network device and the terminal to adaptively adjust their own transmission/reception behavior.

FIG. 4c is a flowchart illustrating a method according to embodiments of the present disclosure. As shown in FIG. 4c, embodiments of the present disclosure relate to a method for determining an effective time, and the method includes the following steps.

**In step S4301,** a network device 102 sends first information to a terminal 101 on a first carrier.

In some embodiments, for the related implementation of step S4301, reference may be made to the related implementation of steps S2101, S4102 and S4201, and details are not be repeated here.

**In step S4302,** the network device 102 determines an end position of a first time domain unit corresponding to each carrier according to a minimum SCS among SCSs of a plurality of carriers.

In some embodiments, for the related implementation of step S4302, reference may be made to the related implementation of steps S2101, S2103 and S4103, and details are not be repeated here.

**In step S4303,** the network device 102 determines an effective time of the first information according to a first time domain unit in which the first information is located.

In some embodiments, for the related implementation of step S4303, reference may be made to the related implementation of steps S2104 and S4104, and details are not be repeated here.

In some embodiments, the effective time is after an end position of the first time domain unit, in which the discontinuous transmission/reception pattern is periodic.

In an example, the effective time is spaced from the end position by a first duration, and the first duration is greater than or equal to 0.

In an example, the effective time is a start time of a first discontinuous transmission/reception period after a second duration from the end position, and the second duration is greater than or equal to 0.

In an example, the effective time is an end time of a discontinuous transmission/reception period in which a third duration after the end position is located, and the third duration is greater than or equal to 0.

In an example, the first information indicates to deactivate the discontinuous transmission/reception pattern of the one or more carriers, and the effective time is an end time of a first time period in a discontinuous transmission/reception period in which the first time domain unit is located; and the first time period is a time period in which the network device sends downlink information or receives uplink information in the discontinuous transmission/reception period.

FIG. 4d is a flowchart illustrating a method according to embodiments of the present disclosure. As shown in FIG. 4d, embodiments of the present disclosure relate to a method for determining an effective time, and the method includes the following steps.

**In step S4401,** a network device 102 sends first information to a terminal 101 on a first carrier.

In some embodiments, for the related implementation of step S4401, reference may be made to the related implementation of steps S2101, S4102 and S4201, and details are not be repeated here.

**In step S4402,** the network device 102 determines an end position of a first time domain unit corresponding to a second carrier according to an SCS of the first carrier.

In some embodiments, for the related implementation of step S4402, reference may be made to the related implementation of steps S2101, S2103 and S4103, and details are not be repeated here.

In some embodiments, the second carrier may be any one of the plurality of carriers, or an SCS of the second carrier is greater than or equal to the SCS of the first carrier.

**In step S4403,** the network device 102 determines an effective time of the first information according to a first time domain unit in which the first information is located.

In some embodiments, for the related implementation of step S4403, reference may be made to the related implementation of steps S2104 and S4104, and details are not be repeated here.

In some embodiments, the effective time is after an end position of the first time domain unit, in which the discontinuous transmission/reception pattern is periodic.

In an example, the effective time is spaced from the end position by a first duration, and the first duration is greater than or equal to 0.

In an example, the effective time is a start time of a first discontinuous transmission/reception period after a second duration from the end position, and the second duration is greater than or equal to 0.

In an example, the effective time is an end time of a discontinuous transmission/reception period in which a third duration after the end position is located, and the third duration is greater than or equal to 0.

In an example, the first information indicates to deactivate the discontinuous transmission/reception pattern of the one or more carriers, and the effective time is an end time of a first time period in a discontinuous transmission/reception period in which the first time domain unit is located; and the first time period is a time period in which the network device sends downlink information or receives uplink information in the discontinuous transmission/reception period.

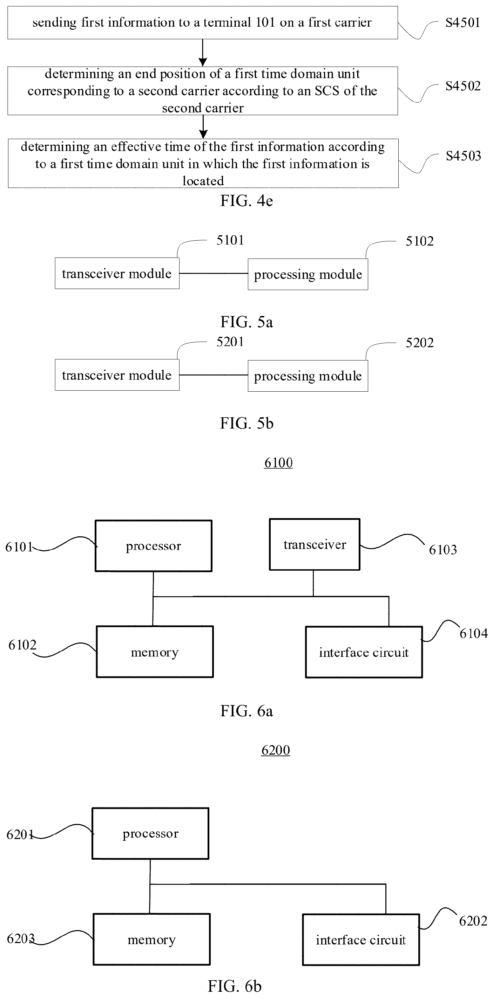

FIG. 4e is a flowchart illustrating a method according to embodiments of the present disclosure. As shown in FIG. 4e, embodiments of the present disclosure relate to a method for determining an effective time, and the method includes the following steps.

**In step S4501,** a network device 102 sends first information to a terminal 101 on a first carrier.

In some embodiments, for the related implementation of step S4401, reference may be made to the related implementation of steps S2101, S4102 and S4201, and details are not be repeated here.

**In step S4502,** the network device 102 determines an end position of a first time domain unit corresponding to a second carrier according to an SCS of the second carrier.

In some embodiments, for the related implementation of step S4502, reference may be made to the related implementation of steps S2101, S2103 and S4103, and details are not be repeated here.

In some embodiments, the SCS of the second carrier is less than an SCS of a first carrier.

**In step S4503,** the network device 102 determines an effective time of the first information according to a first time domain unit in which the first information is located.

In some embodiments, for the related implementation of step S4503, reference may be made to the related implementation of steps S2104 and S4104, and details are not be repeated here.

In some embodiments, the effective time is after an end position of the first time domain unit, in which the discontinuous transmission/reception pattern is periodic.

In an example, the effective time is spaced from the end position by a first duration, and the first duration is greater than or equal to 0.

In an example, the effective time is a start time of a first discontinuous transmission/reception period after a second duration from the end position, and the second duration is greater than or equal to 0.

In an example, the effective time is an end time of a discontinuous transmission/reception period in which a third duration after the end position is located, and the third duration is greater than or equal to 0.

In an example, the first information indicates to deactivate the discontinuous transmission/reception pattern of the one or more carriers, and the effective time is an end time of a first time period in a discontinuous transmission/reception period in which the first time domain unit is located; and the first time period is a time period in which the network device sends downlink information or receives uplink information in the discontinuous transmission/reception period.

In order to facilitate understanding of embodiments of the present disclosure, some specific examples are listed below.

Embodiments of the present disclosure provides a solution for determining an effective time of an instruction to activate or deactivate a cell DTX/DRX to ensure that a base station and a terminal have a consistent understanding on when the cell DTX/DRX starts/ends operating.

### Example 1:

For the instruction to activate or deactivate the cell DTX/DRX, its effective time may be determined as follows.
(1) The instruction takes effect at a T1 duration after an end time of a time domain unit in which the instruction is located.
(2) The instruction takes effect at a start time of a first cell DTX period/a start time of a cell DTX period after a T2 duration from the end time of the time domain unit in which the instruction is located.
(3) The instruction takes effect at an end time of a cell DTX period/an end time of the cell DRX period at which a T3 duration after the end time of the time domain unit in which the instruction is located is located.

The above three cases are applicable to the DTX, the DRX, and activation or deactivation instructions, in which T1 or T2 or T3≧0.

(4) For a deactivation instruction of the cell DTX, since the deactivation instruction is sent using DCI, the deactivation instruction may be sent only in a case where the base station is in a state of cell DTX-on. Considering that the deactivation instruction is to enable the base station to restore to a normal downlink sending state, an effective time of the deactivation instruction may be an end time of a current cell DTX-on duration at which the deactivation instruction is sent.

(5) For the deactivation instruction of the cell DRX, considering that the deactivation instruction is to enable the base station to restore to a normal uplink sending state, if a sending time of the deactivation instruction is within a cell DRX-on duration, the effective time of the deactivation instruction may be an end time of a current cell DRX-on duration at which the deactivation instruction is sent.

In the above (1)/(2)/(3), the start time of the cell DTX period may be the start time of the cell DTX-on duration or the start time of the cell DTX-off duration in the cell DTX period. The start time of the cell DRX period may be the start time of the cell DRX-on duration in the cell DRX period, or may be the start time of the cell DRX-off duration. The end time of the cell DTX period may be the end time of the cell DTX-on duration in the cell DTX period, or the end time of the cell DTX-off duration. The end time of the cell DRX period may be the end time of the cell DRX-on duration in the cell DRX period, or may be the end time of the cell DRX-off duration. As an example, if it is defined that the start time of the cell DTX period may be the start time of the cell DTX-on duration in the cell DTX period, the corresponding end time of the cell DTX period may be the end time of the cell DTX-off duration.

### Example 2:

In the above (1) to (3), it is needed to consider the influence of different SCSs of a plurality of carriers with respect to the "end time of the time domain unit in which the instruction is located". The activation or deactivation instruction may be sent on only one carrier, but includes activation or deactivation information of the cell DTX/DRX corresponding to the plurality of carriers.

Different carriers may have different SCSs. The UE may determine the "end time of the time domain unit in which the instruction is located" at each carrier in the following methods.

The end time of the time domain unit in which the instruction is located is determined according to a slot of the carrier having a minimum SCS among the SCSs of the plurality of carriers corresponding to the UE and an end position for slot in a time domain of slot in which the instruction is, in which the less the SCS, the longer the slot.

The end time of the time domain unit in which the instruction is located is determined according to a slot on a carrier that the instruction is sent and the end position for slot in the time domain of slot in which the instruction is.

If an SCS of a certain carrier is greater than or equal to an SCS of the carrier that the instruction is sent, for the carrier, the end time of the time domain unit in which the instruction is located is determined according to a slot on a carrier that the instruction is sent and the end position for slot in the time domain of slot in which the instruction is. If an SCS of a certain carrier is greater than or equal to the SCS of the carrier that the instruction is sent, for the carrier, the end time of the time domain unit in which the instruction is located is determined according to the slot on the carrier and the end position for slot in the time domain of slot in which the instruction is.

Embodiments of the present disclosure also provide a device for implementing any of the above methods, for example, a device including units or modules for implementing the steps performed by the terminal in any of the above methods. For another example, another device is also provided, which includes units or modules for implementing the steps performed by the network device (such as an access network device, a core network function node, a core network device and the like) in any of the above methods.

It should be understood that the division of each unit or module in the above device is only a division of logical functions, which may be fully or partially integrated into a physical entity or physically separated in actual implementation. Moreover, the units or modules in the device may be implemented in a form of calling software by a processor: for example, the device includes a processor, which is connected with a memory, and instructions are stored in the memory, and the processor calls the instructions stored in the memory to implement any of the above methods or implement the functions of the units or modules of the device, in which the processor is a general-purpose processor, such as a central processing unit (CPU) or a microprocessor, and the memory is a memory in the device or a memory outside the device. In an example, the units or modules in the device may be implemented in a form of hardware circuits, and some or all of the functions of the units or modules may be implemented by designing the hardware circuits, which may be understood as one or more processors; for example, in an implementation, the above-mentioned hardware circuit is an application-specific integrated circuit (ASIC), and some or all of the functions of the above-mentioned units or modules are implemented by designing the logical relationship of elements in the circuit; for another example, in another implementation, the above hardware circuit may be implemented by a programmable logic device (PLD). Take a field programmable gate array (FPGA) as an example, it may include a large number of logic gates, and the connection relationship between the logic gates is configured by configuration files, implementing the functions of some or all of the above units or modules. All the units or modules of the above device may be implemented entirely in the form of calling software by the processor, or entirely in the form of hardware circuits, or partially in the form of calling software by a processor, and the rest is implemented in the form of hardware circuits.

In embodiments of the present disclosure, the processor is a circuit with signal processing capability. In an implementation, the processor may be a circuit with instruction reading and running capability, such as a central processing unit (CPU), a microprocessor, a graphics processing unit (GPU) (which may be understood as a microprocessor), or a digital signal processor (DSP). In another implementation, the processor may realize certain functions through the logical relationship of hardware circuits, which are fixed or reconfigurable. For example, the processor is a hardware circuit implemented by an application-specific integrated circuit (ASIC) or a programmable logic device (PLD), such as an FPGA. In the reconfigurable hardware circuit, the process that the processor loads the configuration document to implement the hardware circuit configuration may be understood as the process that the processor loads instructions to implement the functions of some or all of the above units or modules. Furthermore, it may also be a hardware circuit designed for artificial intelligence, which may be understood as the ASIC, such as neural network processing unit (NPU), tensor processing unit (TPU), deep learning processing unit (DPU) and so on.

FIG. 5a is a block diagram illustrating a terminal 101 according to embodiments of the present disclosure. As shown in FIG. 5a, a terminal 5100 may include at least one of a transceiver module 5101 or a processing module 5102. In some embodiments, the transceiver module 5101 is configured to receive first information sent by a network device, in which the first information indicates activation or deactivation of a discontinuous transmission/reception pattern of one or more carriers. The above processing module 5102 is configured to determine an effective time of the first information according to a first time domain unit in which the first information is received.

In an example, the above transceiver module is configured to perform at least one of the communication steps such as sending and/or receiving performed by the terminal 101 in any of the above methods, details are not repeated here. In an example, the above processing module is configured to perform at least one of other steps performed by the terminal 101 in any of the above methods, details are not repeated here.

FIG. 5b is a block diagram illustrating a network device 102 according to embodiments of the present disclosure. As shown in FIG. 5b, a network device 5200 may include at least one of a transceiver module 5201 or a processing module 5202. In some embodiments, the transceiver module is configured to send first information to a terminal, in which the first information indicates activation or deactivation of a discontinuous transmission/reception pattern of one or more carriers. The above processing module 5202 is configured to determine an effective time of the first information according to a first time domain unit in which the first information is located.

In an example, the above transceiver module is configured to perform at least one of the communication steps such as sending and/or receiving performed by the terminal 101 in any of the above methods, details are not repeated here. In an example, the above processing module is configured to perform at least one of other steps performed by the terminal 101 in any of the above methods, details are not repeated here.

In some embodiments, the transceiver module may include a sending module and/or a receiving module, and the sending module and the receiving module may be separate or integrated together. In an example, the transceiver module may be replaced with the transceiver.

In some embodiments, the processing module may be one module or include multiple sub-modules. In an example, the multiple sub-modules respectively perform all or part of the steps required by the processing module. In an example, the processing module may be replaced with the processor.

FIG. 6a is a block diagram illustrating a communication device 6100 according to embodiments of the present disclosure. The communication device 6100 may be a network device (e.g., an access network device, a core network device, etc.), or may be a terminal (e.g., a user equipment, etc.), or may be a chip, a chip system, or a processor supporting the network device to implement any of the above methods, or may be a chip, a chip system, or a processor supporting the terminal to implement any of the above methods. The communication device 6100 may be used to implement the method described in the above-mentioned method embodiment, for details, reference may be made to the description in the above-mentioned method embodiment.

As shown in FIG. 6a, the communication device 6100 includes one or more processors 6101. The processor 6101 may be a general-purpose processor or a special-purpose processor, for example, a baseband processor or a central processing unit. The baseband processor may be used to process communication protocols and communication data, and the central processor may be used to control communication devices (such as a base station, a baseband chip, a terminal, a terminal chips, a DU or a CU, etc.), execute programs, and process program data. The communication device 6100 is used to perform any of the above methods.

In some embodiments, the communication device 6100 further includes one or more memories 6102 for storing instructions. In an example, all or part of the memory 6102 may be located outside the communication device 6100.

In some embodiments, the communication device 6100 further includes one or more transceivers 6103. In a case where the communication device 6100 includes one or more transceivers 6103, the transceiver 6103 performs at least one of the communication steps such as sending and/or receiving (such as step S2101 and step S2102, but not limited to this) in the above method, and the processor 6101 performs at least one of other steps (such as step S2103, step S2104 and step S2105, but not limited to this).

In some embodiments, the transceiver may include a receiver and/or a transmitter, which may be separate or integrated. In an example, the terms such as transceiver, transceiver unit, transceiving machine, transceiver circuit, etc. may be replaced with each other, and the terms such as transmitter, transmitting unit, transmitting machine, transmitting circuit and the like may be replaced with each other, and the terms such as receiver, receiving unit, receiving machine, receiving circuit and the like may be replaced with each other.

In some embodiments, the communication device 6100 may include one or more interface circuits 6104. In an example, the interface circuit 6104 is connected to the memory 6102. The interface circuit 6104 may be used to receive signals from the memory 6102 or other devices, and may be used to send signals to the memory 6102 or other devices. For example, the interface circuit 6104 may read an instruction stored in the memory 6102 and send the instruction to the processor 6101.

The communication device 6100 described in the above embodiments may be a network device or a terminal, but the scope of the communication device 6100 described in the present disclosure is not limited to this. The structure of the communication device may not be limited by FIG. 6a. The communication device may be a stand-alone device or may be part of a larger device. For example, the communication device may be: 1) a stand-alone integrated circuit (IC), or a chip, or a chip system or subsystem; 2) a set of one or more ICs, in which In an example, the set of ICs may also include a storage component for storing data and programs; 3) an ASIC, such as a modem; 4) a module that may be embedded in other devices; (5) a receiver, a terminal device, an intelligent terminal device, a cellular phone, a wireless device, a handheld device, a mobile unit, an in-vehicle device, a network device, a cloud device, an artificial intelligence device, etc.; (6) others.

FIG. 6b is a block diagram illustrating a chip 6200 according to embodiments of the present disclosure. In a case where the communication device 6100 may be a chip or a chip system, please refer to the block diagram of the chip 6200 shown in FIG. 6b, but it is not limited to this.

The chip 6200 includes one or more processors 6201, and the chip 6200 is used to perform any of the above methods.

In some embodiments, the chip 6200 also includes one or more interface circuits 6202. In an example, the interface circuit 6202 is connected to the memory 6203. The interface circuit 6202 may be used to receive signals from the memory 6203 or other devices, and the interface circuit 6202 may be used to send signals to the memory 6203 or other devices. For example, the interface circuit 6202 may read an instruction stored in the memory 6203 and send the instruction to the processor 6201.

In some embodiments, the interface circuit 6202 performs at least one of the communication steps such as sending and/or receiving (such as step S2101 and step S2102, but not limited to this) in the above method, and the processor 6201 performs at least one of other steps (such as step S2103, step S2104 and step S2105, but not limited to this).

In some embodiments, the terms such as interface circuit, interface, transceiver pin, transceiver and the like may be replaced with each other.

In some embodiments, the chip 6200 further includes one or more memories 6203 for storing instructions. In an example, all or part of the memory 6203 may be outside the chip 6200.

The present disclosure further proposes a storage medium on which instructions are stored, which, when executed on the communication device 6100, cause the communication device 6100 to perform any of the above methods. In an example, the storage medium is an electronic storage medium. In an example, the storage medium is a computer-readable storage medium, but it is not limited to this, and it may also be a storage medium readable by other devices. In an example, the storage medium may be a non-transitory storage medium, but it is not limited to this, and it may also be a temporary storage medium.

The present disclosure further proposes a program product which, when executed by the communication device 6100, causes the communication device 6100 to perform any of the above methods. In an example, the program product is a computer program product.

The present disclosure further proposes a computer program that, when run on a computer, causes the computer to perform any of the above methods.

### INDUSTRIAL PRACTICALITY

In the method of the present disclosure, in a case where a terminal receives first information sent by a network device, the terminal may determine an effective time of the first information according to a first time domain unit in which the first information is located, such that a timing of activation or deactivation of a discontinuous transmission/reception pattern of the corresponding carrier may be obtained in time, which is beneficial for adjusting its own transmission/reception behavior in conjunction with the discontinuous transmission/reception pattern.

## Claims

1. A method for determining an effective time, comprising:
receiving, by a terminal, first information sent by a network device, wherein the first information indicates activation or deactivation of a discontinuous transmission/reception pattern of one or more carriers; and
determining, by the terminal, an effective time of the first information according to a first time domain unit in which the first information is located.

2. The method of claim 1, wherein
the effective time is after an end position of the first time domain unit.

3. The method of claim 2, wherein
the effective time is spaced from the end position by a first duration, and the first duration is greater than or equal to 0.

4. The method of claim 2, wherein
the effective time is a start time of a first discontinuous transmission/reception period of the discontinuous transmission/reception pattern after a second duration from the end position, and the second duration is greater than or equal to 0.

5. The method of claim 2, wherein
the effective time is an end time of a discontinuous transmission/reception period of the discontinuous transmission/reception pattern in which a third duration after the end position is located, and the third duration is greater than or equal to 0.

6. The method of claim 1 or 2, wherein
the first information indicates to deactivate the discontinuous transmission/reception pattern of the one or more carriers, and the effective time is an end time of a first time period in a discontinuous transmission/reception period of the discontinuous transmission/reception pattern in which the first time domain unit is located; and
the first time period is a time period in which the network device sends downlink information or receives uplink information in the discontinuous transmission/reception period.

7. The method of any one of claims 1 to 6, wherein
the discontinuous transmission/reception period of the discontinuous transmission/reception pattern comprises a first time period and a second time period, a start time of the discontinuous transmission/reception period is a start time of the first time period or a start time of the second time period, and an end time of the discontinuous transmission/reception period is an end time of the second time period or an end time of the first time period; and
the first time period is a time period in which the network device sends downlink information or receives uplink information in the discontinuous transmission/reception period, and the second time period is a time period in which the network device is not able to send part of the downlink information or receive part of the uplink information.

8. The method of any one of claims 1 to 7, wherein receiving, by the terminal, the first information sent by the network device comprises:
receiving, by the terminal on a first carrier, the first information sent by the network device;
wherein a plurality of carriers have different subcarrier spacings (SCSs), and the plurality of carriers comprise the first carrier.

9. The method of claim 8, further comprising:
determining, by the terminal according to a minimum SCS among the SCSs of the plurality of carriers, an end position of a first time domain unit corresponding to each carrier.

10. The method of claim 8, further comprising:
determining, by the terminal according to an SCS of the first carrier, an end position of a first time domain unit corresponding to a second carrier, wherein the plurality of carriers comprise the second carrier.

11. The method of claim 10, wherein
the second carrier is any one of the plurality of carriers, or
an SCS of the second carrier is greater than or equal to the SCS of the first carrier.

12. The method of claim 8, further comprising:
determining, by the terminal according to an SCS of a second carrier, an end position of a first time domain unit corresponding to the second carrier, wherein the SCS of the second carrier is less than an SCS of the first carrier.

13. The method of any one of claims 1 to 12, wherein the discontinuous transmission/reception pattern comprises any of:
a discontinuous transmission (DTX) pattern; or
a discontinuous reception (DRX) pattern.

14. A method for determining an effective time, comprising:
sending, by a network device, first information to a terminal, wherein the first information indicates activation or deactivation of a discontinuous transmission/reception pattern of one or more carriers; and
determining, by the network device, an effective time of the first information according to a first time domain unit in which the first information is located.

15. The method of claim 14, wherein
the effective time is after an end position of the first time domain unit.

16. The method of claim 15, wherein
the effective time is spaced from the end position by a first duration, and the first duration is greater than or equal to 0.

17. The method of claim 15, wherein
the effective time is a start time of a first discontinuous transmission/reception period of the discontinuous transmission/reception pattern after a second duration from the end position, and the second duration is greater than or equal to 0.

18. The method of claim 15, wherein
the effective time is an end time of a discontinuous transmission/reception period of the discontinuous transmission/reception pattern in which a third duration after the end position is located, and the third duration is greater than or equal to 0.

19. The method of claim 14 or 15, wherein
the first information indicates to deactivate the discontinuous transmission/reception pattern of the one or more carriers, and the effective time is an end time of a first time period in a discontinuous transmission/reception period of the discontinuous transmission/reception pattern in which the first time domain unit is located; and
the first time period is a time period in which the network device sends downlink information or receives uplink information in the discontinuous transmission/reception period.

20. The method of any one of claims 14 to 19, wherein
the discontinuous transmission/reception period of the discontinuous transmission/reception pattern comprises a first time period and a second time period, a start time of the discontinuous transmission/reception period is a start time of the first time period or a start time of the second time period, and an end time of the discontinuous transmission/reception period is an end time of the second time period or an end time of the first time period; and
the first time period is a time period in which the network device sends downlink information or receives uplink information in the discontinuous transmission/reception period, and the second time period is a time period in which the network device is not able to send part of the downlink information or receive part of the uplink information.

21. The method of any one of claims 14 to 20, wherein sending, by the network device, the first information to the terminal comprises:
sending, by the network device on a first carrier, the first information to the terminal,
wherein a plurality of carriers have different subcarrier spacings (SCSs), and the plurality of carriers comprise the first carrier.

22. The method of claim 21, further comprising:
determining, by the network device, according to a minimum SCS among the SCSs of the plurality of carriers, an end position of a first time domain unit corresponding to each carrier.

23. The method of claim 21, further comprising:
determining, by the network device, according to an SCS of the first carrier, an end position of a first time domain unit corresponding to a second carrier, wherein the plurality of carriers comprise the second carrier.

24. The method of claim 23, wherein
the second carrier is any one of the plurality of carriers, or
an SCS of the second carrier is greater than or equal to the SCS of the first carrier.

25. The method of claim 21, further comprising:
determining, by the network device according to an SCS of a second carrier, an end position of a first time domain unit corresponding to the second carrier, wherein the SCS of the second carrier is less than an SCS of the first carrier.

26. A terminal, comprising:
a transceiver module, configured to receive first information sent by a network device, wherein the first information indicates activation or deactivation of a discontinuous transmission/reception pattern of one or more carriers; and
a processing module, configured to determine an effective time of the first information according to a first time domain unit that in which the first information is received.

27. A network device, comprising:
a transceiver module, configured to send first information to a terminal, wherein the first information indicates activation or deactivation of a discontinuous transmission/reception pattern of one or more carriers; and
a processing module, configured to determine an effective time of the first information according to a first time domain unit in which the first information is located.

28. A terminal, comprising:
one or more processors,
wherein the terminal is configured to perform the method of any one of claims 1 to 13.

29. A network device, comprising:
one or more processors,
wherein the terminal is configured to perform the method of any one of claims 14 to 25.

30. A communication system, comprising a network device and a terminal, wherein
the terminal is configured to implement the method of any one of claims 1 to 13; and
the network device is configured to implement the method of any one of claims 14 to 25.

31. A storage medium storing instructions that, when run on a communication device, enable the communication device to perform the method of any one of claims 1 to 13 or any one of claims 14 to 25.
